# EUROPEAN PATENT SPECIFICATION

(11) **EP 1 294 601 B1**
(45) Date of publication and mention of the grant of the patent: **21.05.2008**
(21) Application number: 01937459.4
(22) Date of filing: 17.05.2001
(51) Int. Cl.: B60T 13/52

(54) **OUTPUT PUSH ROD AND SPRING RETAINER**
AUSGANGSSEITIGE DRUCKSTANGE UND FEDERBEHÄLTER
TIGE DE POUSSEE DE SORTIE ET COUPELLE

(30) Priority: 30.05.2000 US 819043
(43) Date of publication of application: 26.03.2003
(73) Proprietor: ROBERT BOSCH CORPORATION, Broadview, IL 60153 (US)
(72) Inventor: HORNER, Charles, Byron, South Bend, IN 46614 (US)
(74) Representative: Möldner, Peter
(86) International application number: PCT/US2001/015855
(87) International publication number: WO 2001/092074

(56) References cited:
- EP-A- 0 194 773
- GB-A- 2 235 017
- US-A- 4 766 804

## Description

This invention relates to a retainer for holding a return spring and output push rod in an axial bore of a hub of a movable wall in a vacuum brake booster.

### BACKGROUND OF THE INVENTION

U.S. Patent 5,233,911 discloses a typical tandem brake booster through which a force is developed to effect a brake application. In such a brake booster, corresponding first and second walls divide the interior into first and second front chambers and first and second rear chambers. The first front chamber is externally connected to a first source of fluid pressure by a conduit and internally directly connected to the second front chamber and to the first and second rear chambers by various passageways in a hub associated with the first and second walls. A control valve located in the hub is positioned such that the first fluid pressure is communicated in the first and second rear chambers through the passageways to define a rest or ready position. In responsive to an input force, the control valve is positioned such that a second fluid pressure is presented through a passageway to the first and second rear chambers to create a pressure differential across the first and second walls. This pressure differential acts on the first and second walls to develop an output force, which is provided to a master cylinder to assist in effecting a brake application. On termination of the input force, a return spring positions the control valve to a rest or ready location to define a first mode of operation where the second fluid is evacuated from the first and second rear chambers to provide for equalization of the first fluid pressure in the first and second rear chambers. This type vacuum brake booster functions in an adequate manner to provide an assist in effecting a brake application.

U.S. Patents 4,409,885; 4,942,738; 5,313,796; 5,329,769 EPO194773, and 5,802,852 disclose brake booster and master cylinder arrangements wherein at least a portion of the master cylinder housing is positioned within the interior of the booster housing to define an integrated brake assembly. Such brake boosters operate in a satisfactory manner but because of their overall size occupies considerable under the hood space when installed in a vehicle. In this arrangement it is common for the brake boosters and master cylinders to manufactured in different locations and assembled as a central location. Unfortunately, the output push rod, which is considered to be part of the brake booster, must be separately shipped to the assembly location, as it is not fixed to the movable wall. U.S. Patents 4,892,027 and 4,898,073 disclose structure, which is designed to retain an output push rod within a brake booster. However, when a housing of a master cylinder is recessed into a brake booster if the return spring is located between the shell housing and movable wall external to the hub, there is a possibility of interference between the housing of the master cylinder housing and moveable wall of the brake booster.

### SUMMARY OF THE INVENTION

A primary object of the present invention is to provide structure for retaining both an output push rod and a return spring within an axial bore of a hub member associated with a movable wall of a brake booster assembly.

The brake booster has housing with an interior divided by a movable wall assembly into at least a first front chamber and at least a first rear chamber. The wall assembly has a hub with a cylindrical projection, which extends through the housing into the surrounding environment. A control valve located in an axial bore formed in the hub has a first mode of operation wherein the front chamber which is permanently connected to a first source of pressure (vacuum) is in communication with the rear chamber to provide for equal pressures therein and a second mode of operation wherein the second chamber is in communication with a surrounding environment (atmospheric pressure) to create a pressure differential across the movable wall assembly. An operational force created by a pressure differential acting on the wall assembly is communicated through a reaction member into an output push rod. After the operational force overcomes a return spring, the output push rod moves pistons in a master cylinder to pressurize fluid therein. This pressurized fluid is supplied to wheel brakes to effect a brake application. The brake booster is characterized by a retainer having a base with an axial opening and a plurality of axial legs, which extend from the base. The base is located in the axial bore with a shaft of the output push rod passing through the axial opening while the plurality of axial legs are located in corresponding a plurality of arcuate and axial slots located on the peripheral surface of the axial bore in the cylindrical body of the hub. The plurality of axial legs frictionally engage the hub to position the base in the axial bore such that a head of the output push rod is located adjacent the reaction member and the shaft and return spring are concentrically located along the axis of the axial bore.

An advantage of the brake booster resides in a retainer, which holds a return spring and output push rod in a concentric position within an axial bore of a hub connected to a movable wall.

A further advantage of resides in the manufacture of a brake booster where a return spring means and output push rod are held in an axial bore of a hub by a retainer prior to being connected to a housing of a master cylinder.

### DETAILED DESCRIPTION

The description describes a brake booster having a housing formed by joining a front shell to a rear shell through a locking arrangement. A partition arrangement of the type disclosed in U.S. Patent 3,897,718, engages a cylindrical body or hub and with movable walls and 24 separate the interior of the housing into front and rear chambers. The movable walls and correspondingly have a diaphragm and a backing plate that are fixed to the peripheral surface of hub. Hub has a stepped axial bore which extends from a first end located in the front chamber to a second end which passes through the rear shell and is located in a surrounding environment. Hub has a first series of passageways through which the front chambers are permanently connected to each other upstream of a valve seat and a second series of passageways through which the rear chambers are selectively connected to each other downstream of vacuum seat. A control valve, of the type disclosed in U.S. Patent 4,953,446, has a plunger located on bearing surface of hub, a poppet assembly retained in the stepped axial bore by sleeve and a push rod. The bearing surface is concentric with and holds plunger in an aligned axial position within the stepped axial bore.

The stepped axial bore, is further characterized by a plurality of arcuate slots, located in the peripheral surface of stepped axial bore. The plurality of arcuate slots extend from the first end to a face adjacent bearing surface of hub. The plurality of arcuate slots are identical and share a central radial rib or wall. The hub includes a plurality of arcuate lips on the interior surface of hub which cover a portion of the arcuate slots. The central radial rib or wall along with the plurality of arcuate lips define a plurality of locking surfaces or arcs within the stepped axial bore.

A plate located in the stepped axial bore engages face on hub and with retainer holds a cup of the output push rod in a annular groove of hub. The annular groove assists in holding shaft in axial alignment with the stepped axial bore. In addition, cup also carries a reaction member that is positioned adjacent face. When brake booster is in operation, reaction member 96 receives an operational force from hub that is communicated into the output push rod.

The retainer has a base with an irregular peripheral surface, an axial opening through the base and a plurality of axial legs which extend from the base. The plurality of axial legs are joined together by a ring-flange to define a rigid structure. Each of the plurality of legs is identical and have a T shape defined by a central rib with first and second arms extending therefrom. The first and second arms, which are designed to flex about the central rib have a fixed width which is greater than the width of locking surfaces or arc defined in the arcuate slots in hub. The plurality of legs are correspondingly located in the plurality of arcuate slot along the axis of the stepped bore. The first arm of each leg tangentially engages the central rib or wall while the second arm is located between a lip and side of a slot. Since the width of the first and second arms is greater that the width of a corresponding locking surface frictional resistance occurs, the arms and flex to hold the legs of the retainer are pushed into the stepped axial bore. The base engages plate which in turn contacts head of the output push rod to hold shaft which extends through to the axial opening in axial alignment with the axis of the stepped axial bore. The base further has an annular ring concentrically spaced from opening and a plurality of hooks or tabs concentrically spaced from the annular ring. The plurality of hooks or tabs engage and hold a first coil of a first return spring of spring arrangement against base.

The retainer further includes an end cap having a base with an annular projection or ring concentrically spaced from an opening and a plurality of hooks or tabs concentrically spaced from the annular projection or ring which engage a second coil of return spring to assist in holding a second return spring between base and base. Base also includes a second plurality of hooks or tabs which engage a first coil of the second return spring between base and base. Base further includes a tapered flange leading into opening, the slope of the tapered flange provides a guide for end of push rod with respect to piston located in master cylinder. Base includes an aligning rib that is located in a groove in housing of master cylinder. Flange of housing is connected to the front shell by mounting bolts such that the bore in master cylinder is axially aligned with the stepped axial bore while locating rib in groove along with rings keep springs spaced apart.

### METHOD OF ASSEMBLY

As is common with a tandem brake booster various components are pre-assembled and in accordance with the present invention the return spring are assembled with retainer in the following manner. The first return spring is pushed onto base such that hooks or tabs engage the first coil and retain the first coil 126 against the base. The end of the second return spring is place against base and now end cap is pushed onto the return springs such that hooks or tabs engage the second coil to hold the second coil against base and at the same time hooks or tabs, engage a first coil of the second return to cage the second return spring between base and base.

In the assembly of brake booster, the first and second walls are connected to cylindrical body or hub and the control valve retained in the axial stepped bore. The cup of output push rod is located in groove such that shaft is aligned along the axis of the stepped axial bore. Plate is inserted into the stepped axial bore such that the passageways in hub are not blocked and the sub-assembly of retainer and return spring thereafter inserted into the stepped axial bore. The offset of legs from base allows for alignment of branches and to be inserted into slots such that arm engages rib or wall and arm engages the sides. Since the arcuate width of arms and arm is greater than a corresponding locking arc friction occurs as retainer is pushed into the stepped axial bore. When base engages face, plate and cup will be located in the stepped axial bore such that reaction member is adjacent face of bearing surface and shaft is in axial alignment with the stepped axial bore. In this assembly, the retainer with the return springs are completely located in the stepped axial bore. Thereafter, the cylindrical body of hub is passed through bearing on the rear shell and bead respectively positioned to the front shell by partitionist and bead secured to the front shell and rear shell by the locking arrangement to complete the assembly of the brake booster. This brake booster is fully assembled and can be transported to another location as the return spring arrangement and output push rod are completely retained within the stepped axial bore of the hub by retainer and as a result they will not be lost or mis-alinged when later joined with a master cylinder.

The brake booster when presented at another location can be joined to an appropriate master cylinder in the following manner.

After the end of shaft of the output push rod is adjusted to the stroke of the pistons of the master housing is inserted in opening in the front shell. The flange on housing is aligned with mounting bolts and housing moves into the front chamber and encounters rib on end cap. Tapered flange on end cap acts as a guide for end on shaft and further movement of housing into chamber brings aligning rib into groove on housing such that the return springs and bore in the master cylinder are aligned with the stepped axial bore. When nuts are tightened on bolts flange 206 is brought into engagement with the front shell and the return spring compressed to position the wall in a rest position to complete assembly of the booster assembly.

### Mode of Operation

In response to an input force applied to input rod; plunger moves to allow poppet member to engage seat and terminate communication between the front chambers to the rear chambers through the stepped axial bore. Further movement of plunger moves face away from the poppet member to allow air from the surrounding environment to be communicated to the rear chambers by way of passageways to create a pressure differential across walls. This pressure differential acts on walls to develop an operational force that is communicated through hub into reaction member. After overcoming the force of return spring, the operational force moves output rod which in turn moves pistons in the master cylinder to pressurize fluid in the master cylinder. The fluid pressurized by the master cylinder pistons communicated to the wheel brakes to effect a corresponding brake application.

## Claims

1. A brake booster having a housing with an interior separated into at least a first chamber and a second chamber by a wall connected to a hub, said hub has a cylindrical body with a stepped axial bore that extends from a first end to a second end, a control valve located in said stepped axial bore for sequentially connecting said first chamber with said second chamber to provide for the equalization of fluid pressure therein in a first mode of operation and in response to an input signal defining a second mode of operation where communication between said first and second chambers is interrupted while initiating communication between said second chamber and a surrounding environment to allow air to enter said second chamber and create a pressure differential across said wall said pressure differential acting on said wall to develop an output force which acts on said hub to develop an operational force which is communicated through a reaction member into an output push rod, said operational force, after overcoming a return spring, moving said output push rod which supplies pistons located in a master cylinder with an operational input to pressurize fluid in the master cylinder which is communicated to wheel brakes to effect a brake application, said brake booster being **characterized by** a retainer having a base with an axial opening and a plurality of axial legs which extend from the base, said base being located in said stepped axial bore with said output push rod passing through said axial opening while said plurality of legs resiliently engaging said hub to position said base in said stepped axial bore such that said output push rod is held in a position adjacent said reaction member.

2. The brake booster as recited in claim 1 wherein said hub is **characterized by** a plurality of arcuate slots located on the peripheral surface of said stepped axial bore which receive said plurality of legs to aligning said base within said stepped axial bore such that said output push rod is located along the axis of said hub.

3. The brake booster as recited in claim 2 wherein said retainer is further **characterized by** a ring-flange connected to said plurality of legs to define a rigid structure.

4. The brake booster as recited in claim 3 wherein each of said plurality of axial arcuate slots is further **characterized by** a side wall and a concentric arcuate lip, said side wall and a concentric arcuate lip defining a locking surface within said stepped axial bore.

5. The brake booster as recited in claim 4 wherein said each of said plurality of legs each is further defined by central rib with first and second arms extending therefrom, said first and second arms defining a fixed width which is greater than said locking surface, said first arm engaging said side wall while said second arm engages said arcuate lip to frictionally hold a leg within one of said plurality of arcuate slots.

6. The brake booster as recited in claim 5 wherein said base is further **characterized by** a first plurality of tabs that engage and hold said return spring in said stepped axial bore.

7. The brake booster as recited in claim 6 further **characterized by** a plate located between said base and a head of said output push rod to provide for a uniform distribution of said operational force into said return spring.

8. The brake booster as recited in claim 7, wherein said retainer is further **characterized by** an end cap having a second plurality of tabs that engage said return spring and a projection, said projection engaging said master cylinder to axially align said return spring within said stepped axial bore.

9. The brake booster as recited in claim 8 wherein said end cap is further **characterized by** guides that aid in aligning said projection with a seat on said master cylinder.

10. A brake booster having a control valve located in a axial bore in a hub of a movable wall for communicating a first chamber with a second chamber in a first mode of operation and communicating said second chamber with a surrounding environment to create a pressure differential across said movable wall which separates said first chamber from said second chamber in a second mode of operation, a reaction member carried by said movable wall communicates an operational force created by said pressure differential into an output push rod, said output push rod after overcoming a return spring moving to provide pistons in a master cylinder with a corresponding operational force to develop pressurized fluid which is supplied to wheel brakes to effect a brake application, said brake booster being **characterized by** a retainer having a base with an axial opening and a plurality of axial legs which extend from the base, said base being located in said axial bore with a shaft of said output push rod passing through said axial opening while said plurality of axial legs frictionally engage said hub to position said base in said axial bore such that a head of said output push rod is located adjacent said reaction member.

11. The brake booster as recited in claim 10 wherein said hub is **characterized by** a plurality of arcuate and axial slots located on the peripheral surface of said axial bore , said plurality of arcuate and axial slots having at least a first slot located within said axial bore substantially opposite a second acruate and axial slot, said first slot receiving a first leg of said plurality of legs while said second slot receiving a second leg of said plurality of legs to align said base within said axial bore such that said shaft is located along the axis of said hub.

12. The brake booster as recited in claim 11 wherein said plurality of arcuate and axial slots are each further **characterized by** a side wall and a arcuate lip, said arcuate lip being concentric to said slot, said side wall and arcuate lip defining a locking surface (83) within said axial bore.

13. The brake booster as recited in claim 12 wherein each of said first and second legs each is further defined by a rib with first and second arms which extending therefrom, said first and second arms defining a fixed width which is greater than said locking surface, said first arm engaging said side wall while said second arm engages arcuate lip to frictionally hold said leg within an arcuate and axial slot.

14. The brake booster as recited in claim 13 wherein said base is further **characterized by** a first plurality of hooks that engage and hold said return spring in said axial bore.

15. The brake booster as recited in claim 14 further **characterized by** a plate located between said base and head of said output push rod to provide for a uniform distribution of operational force to overcome said return spring and allow said shaft to move pistons associated with the master cylinder.

16. The brake booster as recited in claim 15 wherein said plate distributes spring forces to prevent pre-loading of the output push rod which could effect the operation of the master cylinder.

## Patentansprüche

1. Bremskraftverstärker, der ein Gehäuse mit einem Innenraum, der durch eine mit einer Nabe verbundene Wand in mindestens eine erste Kammer und eine zweite Kammer unterteilt ist, wobei die Nabe einen zylindrischen Körper mit einer abgestuften Axialbohrung, die sich von einem ersten Ende zu einem zweiten Ende erstreckt, aufweist, und ein in der abgestuften Axialbohrung angeordnetes Steuerventil zur sequentiellen Verbindung der ersten Kammer mit der zweiten Kammer zwecks Bereitstellung des Fluiddruckausgleichs darin in einem ersten Betriebsmodus und das als Reaktion auf ein Eingangssignal einen zweiten Betriebsmodus definiert, in dem die Verbindung zwischen der ersten und der zweiten Kammer unterbrochen ist, während eine Verbindung zwischen der zweiten Kammer und einer umliegenden Umgebung eingeleitet wird, damit Luft in die zweite Kammer eintreten und ein Druckdifferential an der Wand erzeugen kann, aufweist, wobei das Druckdifferential auf die Wand einwirkt, um eine Ausgangskraft zu erzeugen, die auf die Nabe einwirkt, um eine Betätigungskraft zu erzeugen, die durch ein Reaktionsglied in eine ausgangsseitige Druckstange weitergeleitet wird, wobei die Betätigungskraft nach der Überwindung einer Rückstellfeder die ausgangsseitige Druckstange bewegt, die in einem Hauptzylinder angeordneten Kolben eine Betätigungseingabe zuführt, um Fluid im Hauptzylinder mit Druck zu beaufschlagen, das an Radbremsen weitergeleitet wird, um eine Bremsbetätigung zu bewirken, wobei der Bremskraftverstärker durch einen Halter **gekennzeichnet** ist, der eine Basis mit einer Axialöffnung und mehreren axialen Schenkeln, die sich von der Basis erstrecken, aufweist, wobei sich die Basis in der abgestuften Axialbohrung befindet und sich die ausgangsseitige Druckstange durch die Axialöffnung erstreckt, während die mehreren Schenkel die Nabe elastisch in Eingriff nehmen, um die Basis in der abgestuften Axialbohrung so zu positionieren, dass die ausgangsseitige Druckstange in einer Position neben dem Reaktionsglied gehalten wird.

2. Bremskraftverstärker nach Anspruch 1, wobei die Nabe durch mehrere bogenförmige Schlitze **gekennzeichnet** ist, die sich an der Umfangsfläche der abgestuften Axialbohrung befinden und die mehreren Schenkel aufnehmen, um die Basis in der abgestuften Axialbohrung auszurichten, so dass die ausgangsseitige Druckstange entlang der Achse der Nabe angeordnet ist.

3. Bremskraftverstärker nach Anspruch 2, wobei der Halter weiterhin durch einen Ringflansch **gekennzeichnet** ist, der mit den mehreren Schenkeln verbunden ist, um eine starre Struktur zu definieren.

4. Bremskraftverstärker nach Anspruch 3, wobei jeder der mehreren axialen bogenförmigen Schlitze weiterhin durch eine Seitenwand und eine konzentrische bogenförmige Lippe **gekennzeichnet** ist, wobei die Seitenwand und eine konzentrische bogenförmige Lippe eine Verriegelungsfläche in der abgestuften Axialbohrung definieren.

5. Bremskraftverstärker nach Anspruch 4, wobei jeder der mehreren Schenkel jeweils weiterhin durch eine mittlere Rippe mit einem ersten und einem zweiten sich davon erstreckenden Arm definiert wird, wobei der erste und der zweite Arm eine festgelegte Breite definieren, die größer ist als die Verriegelungsfläche, wobei der erste Arm die Seitenwand in Eingriff nimmt, während der zweite Arm die bogenförmige Lippe in Eingriff nimmt, um einen Schenkel in einem der mehreren bogenförmigen Schlitze in Reibeingriff zu halten.

6. Bremskraftverstärker nach Anspruch 5, wobei die Basis weiterhin durch mehrere erste Nasen **gekennzeichnet** ist, die die Rückstellfeder in Eingriff nehmen und in der abgestuften Axialbohrung halten.

7. Bremskraftverstärker nach Anspruch 6, weiterhin **gekennzeichnet durch** eine Platte, die zwischen der Basis und einem Kopf der ausgangsseitigen Druckstange angeordnet ist, um für eine gleichmäßige Verteilung der Betätigungskraft in die Rückstellfeder zu sorgen.

8. Bremskraftverstärker nach Anspruch 7, wobei der Halter weiterhin durch eine Endkappe **gekennzeichnet** ist, die mehrere zweite Nasen, die die Rückstellfeder in Eingriff nehmen, und einen Vorsprung, der den Hauptzylinder in Eingriff nimmt, um die Rückstellfeder in der abgestuften Axialbohrung axial auszurichten, aufweist,

9. Bremskraftverstärker nach Anspruch 8, wobei die Endkappe weiterhin durch Führungen **gekennzeichnet** ist, die die Ausrichtung des Vorsprungs auf den Sitz am Hauptzylinder unterstützen.

10. Bremskraftverstärker mit einem Steuerventil, das sich in einer Axialbohrung in einer Nabe einer beweglichen Wand befindet, um in einem ersten Betriebsmodus eine erste Kammer mit einer zweiten Kammer zu verbinden und in einem zweiten Betriebsmodus die zweite Kammer mit einer umliegenden Umgebung zu verbinden, um ein Druckdifferential an der die erste Kammer von der zweiten Kammer trennenden beweglichen Wand zu erzeugen, wobei ein von der beweglichen Wand getragenes Reaktionsglied eine durch das Druckdifferential erzeugte Betätigungskraft in eine ausgangsseitige Druckstange überträgt, wobei sich die ausgangsseitige Druckstange nach Überwindung einer Rückstellfeder bewegt, um Kolben in einem Hauptzylinder eine entsprechende Betätigungskraft zuzuführen, um Druckfluid zu erzeugen, das Radbremsen zugeführt wird, um eine Bremsbetätigung zu bewirken, wobei der Bremskraftverstärker durch einen Halter **gekennzeichnet** ist, der eine Basis mit einer Axialöffnung und mehreren axialen Schenkeln, die sich von der Basis erstrecken, aufweist, wobei sich die Basis in der Axialbohrung befindet und sich ein Schaft der ausgangsseitigen Druckstange durch die Axialöffnung erstreckt, während die mehreren Axialschenkel die Nabe in Reibeingriff nehmen, um die Basis in der Axialbohrung so zu positionieren, dass ein Kopf der ausgangsseitigen Druckstange neben dem Reaktionsglied angeordnet ist.

11. Bremskraftverstärker nach Anspruch 10, wobei die Nabe durch mehrere bogent75rmige und axiale Schlitze **gekennzeichnet** ist, die sich an der Umfangsfläche der Axialbohrung befinden, wobei die mehreren bogenförmigen und axialen Schlitze mindestens einen ersten Schlitz aufweisen, der sich in der Axialbohrung im Wesentlichen gegenüber einem zweiten bogenförmigen und axialen Schlitz befindet, wobei der erste Schlitz einen ersten Schenkel der mehreren Schenkel aufnimmt, während der zweite Schlitz einen zweiten Schenkel der mehreren Schenkel aufnimmt, um die Basis in der Axialbohrung so auszurichten, dass der Schaft entlang der Achse der Nabe angeordnet ist.

12. Bremskraftverstärker nach Anspruch 11, wobei die mehreren bogenförmigen und axialen Schlitze jeweils weiterhin durch eine Seitenwand und eine bogenförmige Lippe **gekennzeichnet** sind, wobei die bogenförmige Lippe konzentrisch zum Schlitz ist und die Seitenwand und die bogenförmige Lippe eine Verriegelungsfläche in der Axialbohrung definieren.

13. Bremskraftverstärker nach Anspruch 12, wobei der erste und der zweite Schenkel jeweils weiterhin durch eine Rippe mit einem ersten und einem zweiten sich davon erstreckenden Arm definiert werden, wobei der erste und der zweite Arm eine festgelegte Breite definieren, die größer ist als die Verriegelungsfläche, wobei der erste Arm die Seitenwand in Eingriff nimmt, während der zweite Arm die bogenförmige Lippe in Eingriff nimmt, um den Schenkel in einem bogenförmigen und axialen Schlitz in Reibeingriff zu halten.

14. Bremskraftverstärker nach Anspruch 13, wobei die Basis weiterhin durch mehrere erste Haken **gekennzeichnet** ist, die die Rückstellfeder in Eingriff nehmen und in der Axialbohrung halten.

15. Bremskraftverstärker nach Anspruch 14, weiterhin **gekennzeichnet durch** eine Platte, die zwischen der Basis und dem Kopf der ausgangsseitigen Druckstange angeordnet ist, um für eine gleichmäßige Verteilung der Betätigungskraft zu sorgen, um die Rückstellfeder zu überwinden und es dem Schaft zu gestatten, dem Hauptzylinder zugeordnete Kolben zu bewegen.

16. Bremskraftverstärker nach Anspruch 15, wobei die Platte Federkräfte verteilt, um eine Vorbelastung der ausgangsseitigen Druckstange zu verhindern, die den Betrieb des Hauptzylinders beeinflussen könnte.

## Revendications

1. Servofrein comportant un carter muni d'une partie intérieure séparée en au moins une première chambre et une seconde chambre par une paroi reliée à un moyeu, ce moyeu comportant un corps cylindrique muni d'un alésage axial étagé s'étendant d'une première extrémité jusqu'à une seconde extrémité, une soupape de commande étant placée dans l'alésage axial étagé pour relier séquentiellement la première chambre à la seconde chambre de manière à assurer l'égalisation de la pression de fluide à l'intérieur de celle-ci dans une premier mode de fonctionnement et en réponse à un signal d'entrée définissant un second mode de fonctionnement dans lequel la communication entre la première chambre et la seconde chambre est coupée, tandis qu'on déclenche la communication entre la seconde chambre et l'environnement extérieur de manière à permettre à de l'air de pénétrer dans la seconde chambre et de créer un différentiel de pression de part et d'autre de la paroi, ce différentiel de pression agissant sur la paroi pour développer une force de sortie qui agit sur le moyeu de manière à développer une force opérationnelle qu'on fait communiquer, par l'intermédiaire d'un élément de réaction, avec l'intérieur d'une tige poussoir de sortie, cette force opérationnelle, après avoir surmonté l'action d'un ressort de rappel, entraînant la tige poussoir de sortie qui fournit à des pistons placés dans un maître cylindre, une entrée opérationnelle de fluide sous pression contenu dans le maître cylindre qu'on fait communiquer avec les freins de roues pour effectuer une application de freinage,
**caractérisé par**
un élément de retenue comportant une base munie d'une ouverture axiale et d'une pluralité de pieds axiaux qui partent de la base, cette base étant placée dans l'alésage axial étagé de façon que la tige poussoir de sortie passe à travers l'ouverture axiale tandis que la pluralité de pieds s'engagent élastiquement sur le moyeu pour positionner la base dans l'alésage axial étage de façon que la tige poussoir de sortie soit maintenue dans une position adjacente à l'élément de réaction.

2. Servofrein selon la revendication 1,
dans lequel
le moyeu est **caractérisé par** une pluralité de fentes courbes situées sur la surface périphérique de l'alésage, de manière à recevoir la pluralité de pieds pour aligner la base à l'intérieur de l'alésage étage de façon que la tige poussoir de sortie soit située le long de l'axe du moyeu.

3. Servofrein selon la revendication 2,
dans lequel
l'élément de retenue est en outre **caractérisé par** une collerette annulaire connectée à la pluralité de pieds pour former une structure rigide.

4. Servofrein selon la revendication 3,
dans lequel
chacune de la pluralité des fentes courbes axiales est outre **caractérisée par** une paroi latérale et une lèvre courbe concentrique, cette paroi latérale et cette lèvre courbe définissant une surface de verrouillage à l'intérieur de l'alésage axial étagé.

5. Servofrein selon la revendication 4,
dans lequel
chacun de la pluralité de pieds est en outre défini par une nervure centrale de laquelle partent un premier bras et un second bras, des premier et second bras définissant une largeur fixe qui est supérieure à la surface de verrouillage, le premier bras s'engageant contre la paroi latérale et le second bras s'engageant contre la lèvre courbe pour maintenir en friction un pied dans l'une des fentes de la pluralité de fentes courbes.

6. Servofrein selon la revendication 5,
dans lequel
la base est en outre **caractérisée par** une pluralité de pattes qui s'engagent sur le ressort de rappel pour maintenir ce ressort de rappel dans l'alésage axial étagé.

7. Servofrein selon la revendication 6,
**caractérisé en outre par**
une plaque placée entre la base et la tête de la tige poussoir de sortie pour donner une répartition uniforme de la force opérationnelle dans le ressort de rappel.

8. Servofrein selon la revendication 7,
dans lequel
l'élément de retenue est en outre **caractérisé par** un capuchon d'extrémité comportant une seconde pluralité de pattes qui s'engagent sur le ressort de rappel, et une saillie qui s'engage dans le maître cylindre pour aligner axialement le ressort de rappel à l'intérieur de l'alésage étagé.

9. Servofrein selon la revendication 8,
dans lequel
le capuchon d'extrémité est en outre **caractérisé par** des guides qui contribuent à aligner la saillie avec un siège prévu sur le maître cylindre.

10. Servofrein comportant une soupape de commande placée dans un alésage axial d'un moyeu d'une paroi mobile pour faire communiquer une première chambre avec une seconde chambre dans un premier mode de fonctionnement, et pour faire communiquer la seconde chambre avec l'environnement extérieur de manière à créer un différentiel de pression de part et d'autre de la paroi mobile qui sépare la première chambre de la seconde chambre, dans un second mode de fonctionnement, un élément de réaction porté par la paroi mobile communiquant une force opérationnelle créée par le différentiel de pression, à l'intérieur d'une tige poussoir de sortie, cette tige poussoir de sortie, après avoir surmonté l'action d'un ressort de rappel, se déplaçant pour appliquer à des pistons montés dans un maître cylindre, une force opérationnelle correspondante destinée à développer du fluide sous pression qui est fourni aux freins de roues pour effectuer une application de freinage,
**caractérisé par**
un élément de retenue comportant une base munie d'une ouverture axiale et d'une pluralité de pieds axiaux qui partent de la base, cette base étant placée dans l'alésage axial de façon que l'arbre de la tige poussoir de sortie passe à travers l'ouverture axiale, tandis que la pluralité de pieds axiaux s'engagent en friction contre le moyeu pour position la base dans l'alésage axial de façon que la tête de la tige poussoir de sortie soit placée dans une position adjacente à l'élément de réaction.

11. Servofrein selon la revendication 10,
dans lequel
le moyeu est **caractérisé par** une pluralité de fentes axiales courbes situées sur le surface périphérique de l'alésage axial, cette pluralité de fentes axiales courbes comportant au moins une première fente placée à l'intérieur de l'alésage axial essentiellement à l'opposé d'une seconde fente axiale courbe, la première fente recevant un premier pied de la pluralité de pieds, tandis que la seconde fente reçoit un second pied de la pluralité de pieds, pour aligner la base à l'intérieur de l'alésage axial de façon que l'arbre soit situé le long de l'axe du moyen.

12. Servofrein selon la revendication 11,
dans lequel
la pluralité de fentes axiales courbes sont en outre **caractérisées** chacune par une paroi latérale et une lèvre courbe, cette lèvre courbe étant concentrique avec la fente, de façon que la paroi latérale et la lèvre courbe définissent une surface de verrouillage à l'intérieur de l'alésage axial.

13. Servofrein selon la revendication 12,
dans lequel
chacun des premier et second pieds est en outre défini par une nervure de laquelle partent des premier et second bras, ces premier et second bras définissant une largeur fixe qui est supérieure à la surface de verrouillage, le premier bras s'engageant contre la paroi latérale tandis que le second bras s'engage contre la lèvre courbe pour maintenir en friction le pied à l'intérieur d'une fente axiale courbe.

14. Servofrein selon la revendication 13,
dans lequel
la base est en outre **caractérisée par** une première pluralité de crochets qui s'engagent sur le ressort de rappel pour maintenir ce ressort de rappel dans l'alésage axial.

15. Servofrein selon la revendication 14,
**caractérisé en outre par**
une plaque placée entre la base et la tête de la tige poussoir de sortie pour donner une répartition uniforme de la force opérationnelle de manière à surmonter l'action de ressort de rappel et à permettre à l'arbre d'entraîner les pistons associés au maître cylindre.

16. Servofrein selon la revendication 15,
dans lequel
la plaque répartit les forces de ressort pour éviter une précharge de la tige poussoir de sortie qui pourrait affecter le fonctionnement du maître cylindre.
